# EUROPEAN PATENT APPLICATION

(11) **EP 1 862 717 A1**
(43) Date of publication of application: **05.12.2007**
(21) Application number: 07425269.3
(22) Date of filing: 09.05.2007
(51) Int. Cl.: F16L 33/22

(54) **Fitting for flexible tubes**

(30) Priority: 31.05.2006 IT BS20060117
(71) Applicant: Emer S.p.a., 25060 Collebeato (Brescia) (IT)
(72) Inventor: Gobbi, Francesco c/o Emer S.p.A., 25060 Collebeato (Brescia) (IT)
(74) Representative: Sangiacomo, Fulvia

(57) **Abstract**

A connector is provided to connect flexible tubes to the body of a tank, pressure reducer valve, valve or multi-valve device or the like, in particular in gas powered vehicle systems. The connector comprises a connection body (10,21) crossed by an axial hole and a tightening nut (12,22). The connector body on one side has a terminal tang (20,26) to be inserted in the tube to be connected and an external threaded section (19,25) to which the tightening nut (12,22) can be screwed onto to tightly block the tube around said tang. On the opposite side, the connector body has a threaded section with external (male) or internal (female) threading (16,30) for attaching the connector body to a corresponding part with, respectively, an internal or external threading formed on the body of a gas tank, pressure reducer valve, valve or multi-valve device or the like.

## Description

### Field of Invention

This invention concerns the connectors for connecting flexible tubes to the body of a tank, a pressure reducing valve, a valve, a multi-valve devices or the like, in particular for gas powered vehicle systems wherein the gas may be LPG or natural gas and tubes are for average and high pressures and made of flexible thermoplastic, TPFE or like.

### State of the Technique

In the field taken into consideration here, connectors or fittings for flexible tubes are already available on the market which, however, are made up of several elements, some of which besides must be precise and set up for conical connection and tightening. Consequently, the connectors for flexible tubes as known and used up to now seem to be relatively complex and with drawbacks in that above all they entail considerable production time and costs and when used several components have to be handled.

### Objective and Summary of the Invention

One objective of this invention is to provide male and female connectors or fittings for flexible tubes, made up of a minimum number of elements, only two or three, therefore easier and with minor production costs and simpler to use and therefore capable of avoiding the drawbacks present in the connections according to the known technique.

According to the invention such an objective is reached, with a connector or fitting for flexible tubes composed of a connector body and a tightening nut, wherein:
- in one version of a male connector, the connector body is crossed axially by a through bore and has , on one side, an end tang, to be inserted in the end of the tube to be connected, and an external threaded section the nut is tightened onto to tightly block the tube around said tang, and, on the opposite side, a threaded section with external threading to fix the connector body to by tightening and a corresponding part with internal threading in the connector body of a gas tank, pressure reducer valve, valve or multi-valve device or the like, and
- in a female connector version, the connector body has a threaded internal portion designed to screw onto an externally threaded lug of the body of a gas tank, pressure reducer valve, valve or multi-valve device or the like to which the flexible tube is to be connected and between said internal threaded portion of the connection body and said externally threaded lug is è positioned a sealing element with two sealing sections facing in opposite directions.

Furthermore, in each of its versions, the connector can incorporate a conical blocking ring to block the flexible tube attached to the connection.

### Brief Description of Drawings

The connector will be however be illustrated more in detail in the following description made in reference to the enclosed indicative and not limiting drawings, in which:
Fig. 1 shows a view in perspective of a male connector;
Fig. 2 shows, a cross-section of the two separated components of the connector:
Fig. 3 shows, a cross-section of the two assembled components of the connector in Fig. 1;
Fig. 4 shows a view in perspective of a female connector;
Fig. 5 shows, a cross-section of the two separated components of the connector in Fig. 4;
Fig. 6 shows, a cross-section of the two assembled components of the connector in Fig. 3; and
Fig. 7 and 8 show, respectively, an exploded view and an assembled cross-section view of a connector with a blocking conical ring.

### Detailed Description of the Invention

The connector proposed here can be straight, as shown in the drawings, or at an angle, both in the male and female versions.

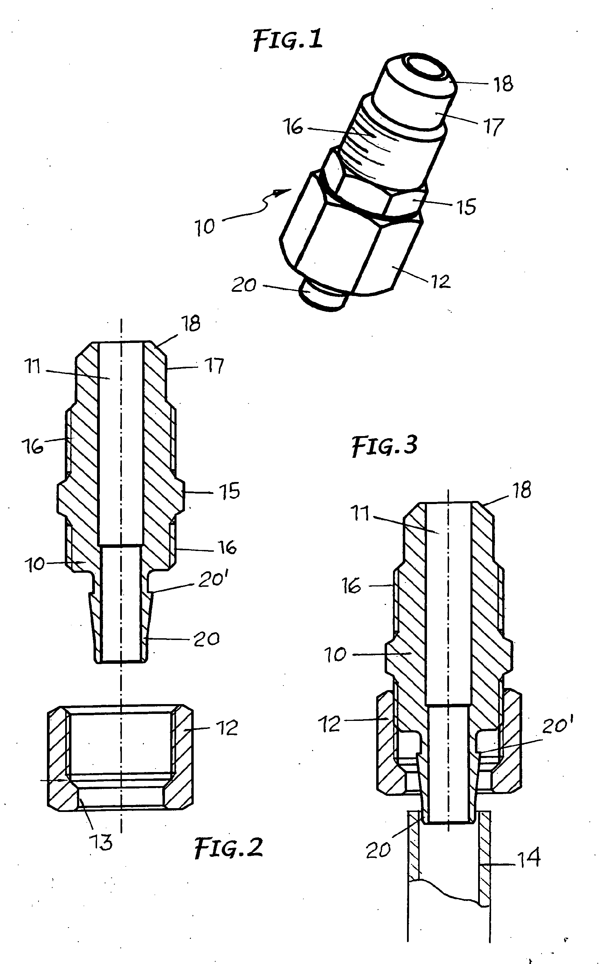

In the male version represented in Figs. 1 to 3, the connector comprises a connector body 10 crossed by an axial passage 11 and a tightening nut 12 with an opening 13 sized to encircle a flexible tube 14 to be fixed to the connector.

Externally, the body of the connector 10 has a polygonal intermediate part 15 to be gripped by a spanner. On a part of said intermediate portion 15, the body presents a threaded zone 16 followed by a cylindrical section 17 with a terminal stop bevel 18. On the part opposite the intermediate portion 15, the connector body 10 has a second threaded area 19 followed by a truncated cone or tube holder tang 20 forming at least an undercut or gripping step 20'. The tightening nut 12 screws onto the second threaded area 19.

The first threaded area 16 of the connector body 10 is provided to be screwed into a corresponding threaded hole - not shown - provided in the body of a tank, pressure reducer valve, valve or multi-valve device used in the gas powered vehicle systems field, whereas the terminal stop bevel 18 rests against and forms a seal with a limit plane provided at the end of said threaded hole. On the other side, the truncated cone tang 20 is designed to be inserted into the end of a flexible tube 14 to be connected, whereas the tightening nut 12 is screwed tightly onto the second threaded area 19 of the connector body tightly blocking in this way the flexible tube 14 on and around the tang with the help of the undercut or gripping step 20'.

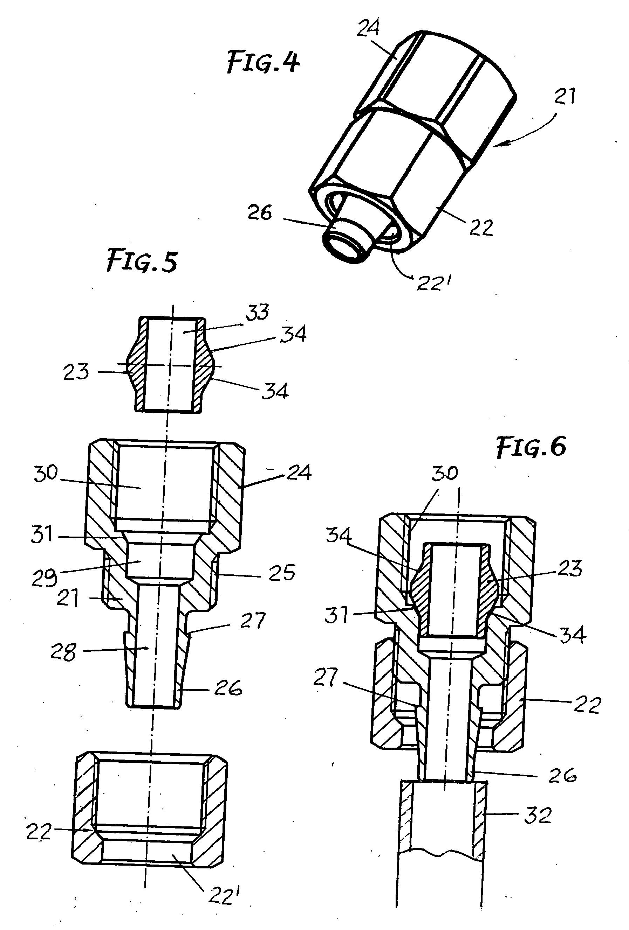

In the female version shown in Figs. 4 to 6, the connector is composed of a connector body 21, a tightening nut 22 and a sealing element 23. In this case the connector body 21 has, externally a polygonal section 24 to be gripped by a spanner, followed by a threaded intermediate section 25 and a truncated cone tang or terminal tube holder 26 with at least an undercut or annular gripping step 27. Internally, the connector body 21 has an axial passage which is provided, in succession starting from the part with the tang, a first section 28 with a smaller diameter, followed by a second section 29 with a bigger diameter than the first section and by a third section 30, the latter threaded, with an even bigger diameter. The second section 29 of the passage connects to the third threaded section 30 by means of a bevel 31. The tightening nut 22 screws onto said intermediate threaded area 25 of the connector body 21 and has an opening 22' sized to enclose a flexible tube 32 to be connected to the connection.

The sealing element 23 is provided with a longitudinal hole 33 with a diameter about the same as the first section of the passage 28 in the body 21 and has, externally an intermediate swelling defining two conical sections 34 facing in opposite directions.

Also in this case, the truncated cone tang 26 is provided to be inserted in one end of the flexible tube 32 to be connected, whereas the tightening nut 22 is tightened onto the threaded intermediate area 25 of the connector body to tightly block the flexible tube onto the tang thanks to the undercut or gripping step of the latter.

On the other side, the connector body is instead fixed, by means of an internal threaded section 30 of the internal passage, and a corresponding threaded part - not shown - protruding from the body of a tank, pressure reducer valve, valve or multi-valve device of gas powered vehicle systems. The sealing element 23 is positioned and block tightly between the bevel 31 on the bottom of said threaded internal section and a similar limit plate at the head of the lug of the body the connector is screwed onto, achieving in this way a correct seal in the coupling point.

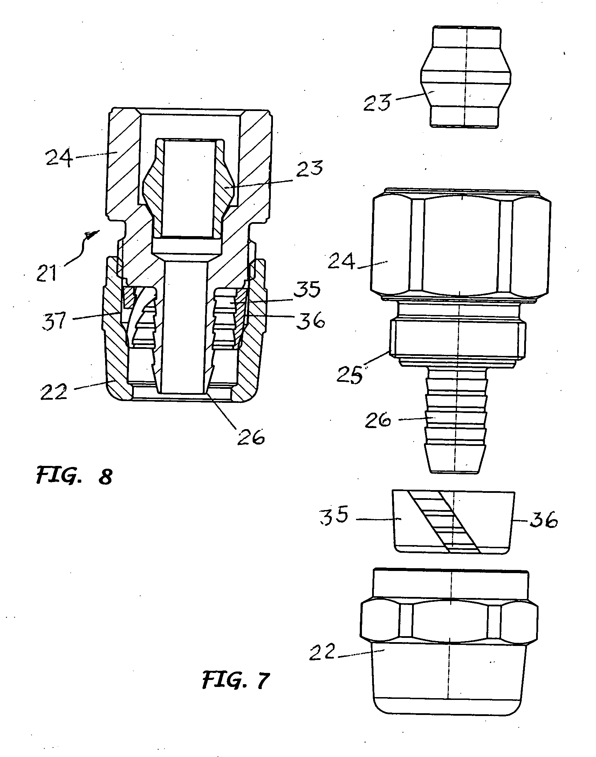

In addition, as shown in Figs 7 and 8, where the same reference numbers are used to indicate same or equivalent parts allocated to those already described in Figs. 4 - 6, between the tightening nut 22 and the tang or tube holder 26 of the connector body 21 a split ring 35, internally toothed, is provided and having an external conical surface 36 designed to interact with a complimentary conical surface 37 inside said tightening nut 22, so that the conical ring 35 closes around the tube, tightly blocking it to the tang or tube holder 26 in response to the tightening of the nut to the threaded intermediate area 35 of the connector body 21.

## Claims

1. A straight or angular connector for flexible tubes for average to high pressure to be connected to the body of a tank, pressure reducer valve, valve or multi-valve device or the like, in particular in gas powered vehicle systems, where the gas may be LPG or natural gas, **characterised by** a connector body (10, 21) crossed by an axial hole and a tightening nut (12, 22), and in that, on one side, said connector body has a tang or terminal tube holder (20, 26) to be inserted in one end of the tube to be connected and an external threaded section (19, 25) to which the tightening nut (12, 22) can be screwed onto to tightly block the tube around said tang, and on the opposite side, a threaded section with external threading (male) or internal (female) (16, 30) for attaching the connector body to a corresponding part with, respectively, an internal or external threading of the body of a gas tank, pressure reducer valve, valve or multi-valve device or the like.

2. Connector according to claim 1, wherein the connector body (10), on the part opposite the tang or tube holder (20), has an external threaded section (16) followed by a cylindrical section (17) with a terminal stop bevel ( (18), and wherein said threaded external section (16) screws into a threaded hole provided in the body of a gas tank, pressure reducer valve, valve or multi-valve device or the like to which the flexible tube is connected, and said stop bevel (18) rests against a shoulder plane provided on the bottom of said threaded hole, forming a seal.

3. Connector according to claim 1, wherein the connector body (21) has an internal threaded section (30) designed to be screwed onto an externally threaded lug of the body of a gas tank, pressure reducer valve, valve or multi-valve device or the like to which the flexible tube is to be connected, and wherein, between said internal threaded section of the connector body and said externally threaded lug a sealing element (23) is located.

4. Connector according to claim 3, wherein said sealing element (23) is crossed by a longitudinal through hole (33) and externally has an intermediate swelling defining two conical sections (34) facing in opposite directions, and wherein said conical sections (34) rest respectively against a shoulder (31) in said external threaded section of the connector body as a seal and at the head of the externally threaded lug, when the connector body is fixed to the body of a gas tank, pressure reducer valve, valve or multi-valve device or the like.

5. Connector according to any of the previous claims, wherein between the tightening screw and the tang or tube holder there is positioned a split ring (35), toothed internally and conical externally, to interact with a conical internal surface of said tightening nut to tighten and block the tube on the tang or tube holder.

6. Connector according to any of the previous claims, in which the tang (20, 26) has externally at least one undercut or annular gripping step to block the flexible tube from inside when the tightening nut (12, 22) is screwed to the connector body.
